# EUROPEAN PATENT APPLICATION

(11) **EP 2 884 160 A1**
(43) Date of publication of application: **17.06.2015**
(21) Application number: 13196938.8
(22) Date of filing: 12.12.2013
(51) Int. Cl.: F21V 8/00

(54) **Light panel**

(71) Applicant: Defond Components Limited, Hong Kong SAR (CN)
(72) Inventor: Quan, Alec Kam Lek, Hong Kong SAR (CN)
(74) Representative: Ward, David Ian

(57) **Abstract**

A light panel has a panel body of a light transmissive material and having a peripheral edge, and a series of discrete light sources mounted on a support and located alongside and facing the peripheral edge for emitting light which penetrates into the panel body via the peripheral edge and illuminates the panel body. The peripheral edge includes a series of recesses accommodating the light sources, each recess having a base, and an outer part between each pair of adjacent recesses for abutment by the support such that the light sources are spaced apart from the bases of the recesses that accommodate the light sources.

## Description

### BACKGROUND OF THE INVENTION

Light panels of the type concerned are also known as light guide panels, primarily for indoor use as direct replacement of fluorescent tubes for indoor commercial lighting.

The light sources used in such light panels are LEDs (i.e. light-emitting diodes), which are the popular choice at present time. In a typical construction, the LEDs (usually mounted on a strip) are packed against the edge of a light guide panel body for illuminating the panel body. As not much if at all attention is paid to the fitting of the LEDs, they are vulnerable to damage by shock or vibration during handling or installation of the light panels.

The invention seeks to mitigate or to at least alleviate such problem or shortcoming by providing a new or otherwise improved light panel.

### SUMMARY OF THE INVENTION

According to the invention, there is provided a light panel comprising a panel body of a light transmissive material and having a peripheral edge, and a series of discrete light sources mounted on a support and located alongside and facing the peripheral edge for emitting light which penetrates into the panel body via the peripheral edge and illuminates the panel body. The peripheral edge includes a series of recesses accommodating the light sources, each recess having a base, and an outer part between each pair of adjacent recesses for abutment by the support such that the light sources are spaced apart from the bases of the recesses that accommodate the light sources.

Preferably, the panel body has two opposite principal sides between which the peripheral edge extends, and each recess is open to both principal sides.

Preferably, the base of each recess has a clear transparent surface, through which light from the light source accommodated in the recess penetrates into the panel body, the clear transparent surface extending linearly in a direction across the principal sides.

More preferably, each recess has a pair of opposite sides flanking its base, whose clear transparent surface has a profile which extends across the opposite sides and determines the angle of dispersion of light from the associated light source penetrating into the panel body.

In a preferred embodiment, the profile is planar.

In another preferred embodiment, the profile is curved across the opposite sides of the recess, being concave or convex facing the associated light source.

More preferably, the profile comprises a series of curved sections across the opposite sides of the recess.

It is preferred that each of the opposite sides adjoins the base via a smoothly curved transition, and optionally the transition comprises a round corner.

Preferably, the or each outer part has a flat surface for abutment by the support.

More preferably, the or each outer part has a smoothly curved transition to each adjoining recess.

Further more preferably, the transition comprises a round shoulder.

It is preferred that the recesses are evenly distributed along the peripheral edge.

It is preferred that each recess accommodates one respective light source.

It is preferred that the panel body includes an array of small light reflectors for reflecting light to exit the panel body.

It is further preferred that the light reflectors comprise pits or laser dots.

### BRIEF DESCRIPTION OF DRAWINGS

The invention will now be more particularly described, by way of example only, with reference to the accompanying drawings, in which:
Figure 1 is a front view of an embodiment of a light panel in accordance with the invention;
Figure 2 is a side view of the light panel of Figure 1;
Figure 3 is a rear view of the light panel of Figure 1;
Figure 4 is an enlarged view of part A of the light panel of Figure 3;
Figure 5 is a cross-sectional view of the light panel part of the Figure 4, taken along line B-B;
Figure 6 is an exploded rear perspective view of the light panel of Figure 1, revealing a panel body thereof;
Figure 7 is an enlarged view of part D of the panel body of Figure 6, showing recesses along an edge thereof for accommodating light sources of the light panel of Figure 1;
Figure 8 is a schematic diagram showing emission of light from two light sources of the light panel of Figure 1, covering an angle of 120°;
Figure 9 is a schematic diagram showing dispersion of light from equivalent light sources into the panel body of a known light panel of the type concerned, covering an angle of 72°;
Figure 9A is a scaled down copy of Figure 9, placed side-by-side with Figure 11A for comparison;
Figure 10 is a schematic diagram showing dispersion of light from the two light sources into the panel body of Figure 7, which is formed with recesses having a flat base, covering an angle of 72°;
Figure 11 is a schematic diagram similar to Figure 10, showing dispersion of light from the two light sources into another panel body formed with recesses having a concave base, covering an angle of 76°;
Figure 11A is a scaled down copy of Figure 11, placed side-by-side with Figure 9A for comparison;
Figure 12 is a schematic diagram similar to Figure 11, showing dispersion of light from the two light sources into a yet another panel body formed with recesses having a more concave base, covering an angle of 82°;
Figure 13 is a schematic diagram similar to Figure 11, showing dispersion of light from the two light sources into a different panel body formed with recesses having a multiple concave base, covering an angle of 90°; and
Figure 14 is a schematic diagram similar to Figure 13, showing dispersion of light from the two light sources into another different panel body formed with recesses having a multiple convex base, covering an angle of 48°.

### DETAILED DESCRIPTION OF PREFERRED EMBODIMENTS

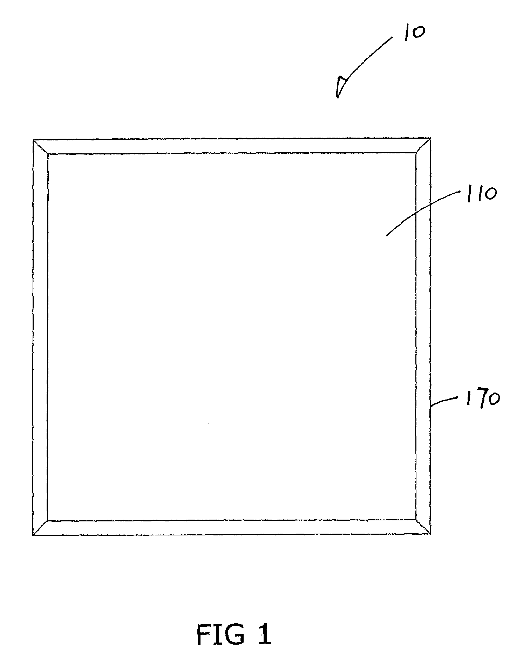

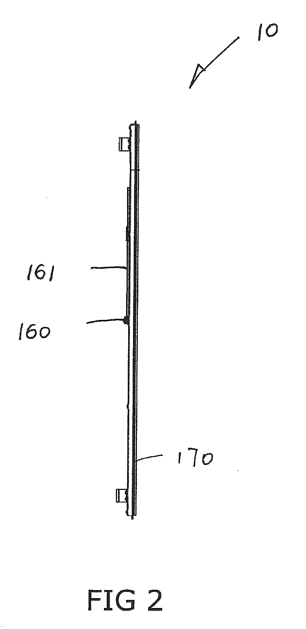

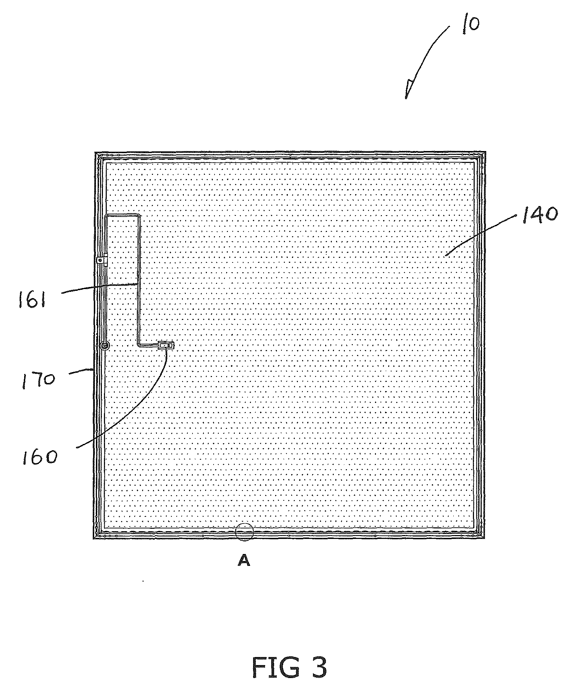

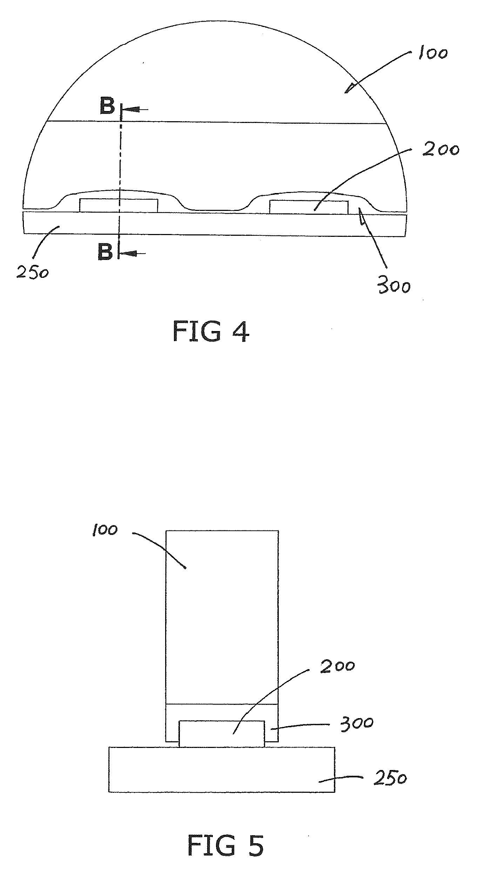

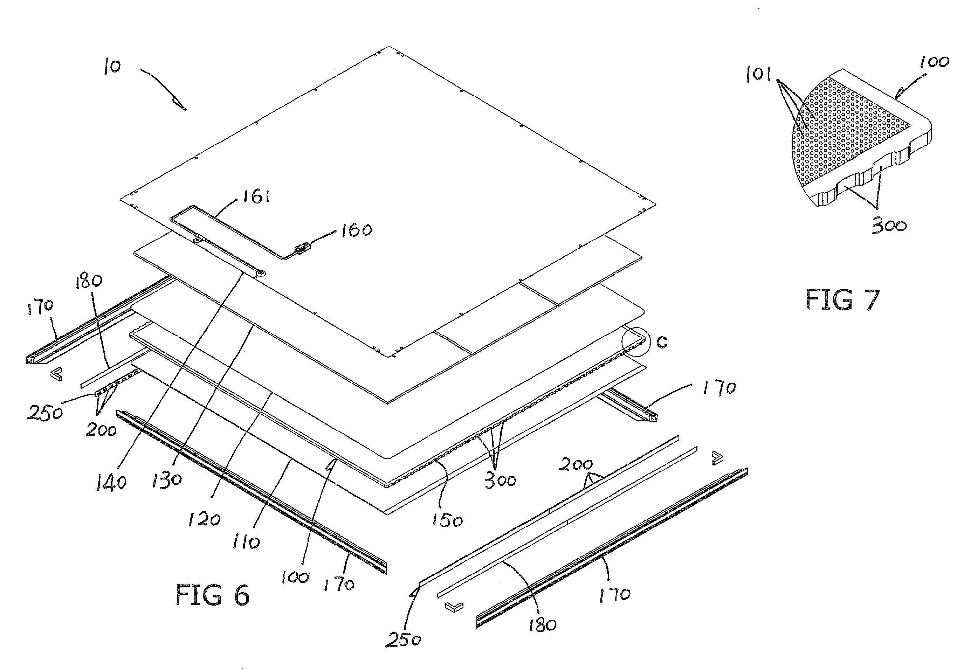

Referring firstly to Figures 1 to 10 of the drawings, there is shown a light panel 10 employing the invention, which has a panel body 100 of a light transmissive material and having a peripheral edge 150, and a series of discrete light sources 200 mounted on a support 250 and located alongside and facing the peripheral edge 150 for emitting light which penetrates into the panel body 100 via the peripheral edge 150 and illuminates the panel body 100.

The panel body 100 has two opposite, front and rear principal sides between which the peripheral edge 150 extends. In this particular embodiment, the panel body 100 is made of a clear transparent acrylic material, and has a square shape as shown, having four sides or edges of which only one pair of opposite edges are the peripheral edges 104, each being fitted with a corresponding series of light sources 200. Hence there are only two series of light sources 200 facing each other, which are implemented by respective LEDs 200.

Each support 250 is provided by a strip of printed circuit board (i.e. PCB), hereinafter referred to as PCB strip 250, on which there are mounted, for example by soldering, forty-two LEDs 200 at regular intervals apart in a row. The PCB strips 250 are of generally the same length as each side or peripheral edge 150 of the panel body 100, such that each of them extends alongside the entire length of the associated peripheral edge 150.

Light from the LEDs 200 penetrated into the panel body 100 via the peripheral edges 150 is, in the majority of cases, reflected a number of times by internal reflection within the panel body 100 before it escapes when it hits an internal surface at an angle of incidence below the critical angle (i.e. when internal reflection does not occur).

The panel body 100 includes an array of small or minute light reflectors 101, in the form of pits burnt out by a laser beam or hence called laser dots 101, which are produced on or just within one of the principal sides of the panel body 100, e.g. the front principal side then called the dot surface. The laser dots 101 are hit or shined by the light of the LEDs 200 being reflected, through internal reflection, within the panel body 100, for in turn reflecting the light to exit the panel body 100 via the latter's principal sides. The exit light then illuminates the space around the panel body 100 and in particular the front principal side that is exposed.

In the assembled structure, the light panel 10 includes a diffuser panel 110 which overlies the exposed front principal side to render illumination by the exit light uniform, and a white reflective sheet 120 behind the rear principal side to recover by reflecting the exit light on that side back into the panel body 100, followed by a spacing sheet 130 and then a back plate 140, on which there is mounted or otherwise fitted a plug 160 connected by a cable 161 for connection of electrical power to energize the LEDs 200. The multi-layered structure is secured together along all four edges by means of a frame 170, which is preferably made of aluminium and provides the necessary rigidity.

The two PCB strips 250 bearing respective series of LEDs 200 are located, in position alongside and facing the corresponding peripheral edges 150 on opposite sides of the panel body 100 for illumination, by the relevant pair of opposite frame members of the frame 170. A thermal tape 180 is preferably attached between each of the PCB strips 250 on the back and the associated frame member for dissipating the heat of the LEDs 200 in operation to the environment via the metal frame member.

Most of the known light panels of the type concerned also include a transparent panel body similar to the panel body 100 as described so far above, in that the peripheral edges of such a panel body designed for light entry is invariably flat straight, against which a series of light sources like the aforesaid LEDs 200 bears. Turning back to the panel body 100, the peripheral edges 150 resemble the edges of a postal stamp. Each peripheral edge 150 is formed with a series of forty-two recesses 300 that accommodate the LEDs 200. In this particular embodiment, the recesses 300 are evenly distributed along each peripheral edge 150, matching the arrangement of the LEDs 200 on the associated PCB strip 250, with each recess 300 designed to act like a pocket for receiving or accommodating one respective LED 200, primarily for the purpose of mechanical protection. The recesses 300 each have a bottom or base 310.

Each peripheral edge 150 includes an outer part 350 between each pair of adjacent recesses 310 for abutment by the support, i.e. PCB strip 250, such that the LEDs 200 are spaced apart from the bases 310 of the recesses 300 that accommodate the LEDs 200. The outer part 350 is provided by the section of the peripheral edge 150 that separates the adjacent recesses 300 of each pair, which may be considered as resulting from the formation of the recesses 300. There are altogether forty-one such outer parts 350 arranged at regular intervals (i.e. the width of each recess 300) apart.

During manufactory, the recesses 300 are formed right at the moment when the peripheral edge 150 is cut to produce the panel body 100 from a larger piece of acrylic sheet material. The cutting tool employed is a laser cutter, which is a useful tool to produce a clear transparent surface along the entire length of the peripheral edge 150 and in particular the bases 310 of the recesses 300. The bases 310 have to be clear transparent for efficacy in letting in light from the LEDs 200 to penetrate into the panel body 100. More specifically, the base 310 of each recess 300 has a clear transparent surface, through which light from the LED 200 accommodated in the recess 300 penetrates into the panel body 100.

Each recess 300 is open to both principal sides of the panel body 100, resembling a cutout insofar as physical form is concerned. The clear transparent surface of its base 310 extends linearly in a direction across, right across or perpendicularly to, the panel body's principal sides.

More specifically, each recess 300 has a pair of opposite left and right sides 320 flanking its base 310, whose clear transparent surface has a profile 311 which extends across the opposite sides 320 and determines the angle of dispersion of light from the associated LED 200 penetrating into the panel body 100. The introduction of the recesses 300 brings about the option, as a secondary purpose, of utilizing the profile 311 of their bases 310 to adjust or determine the angle of dispersion of the penetrating light.

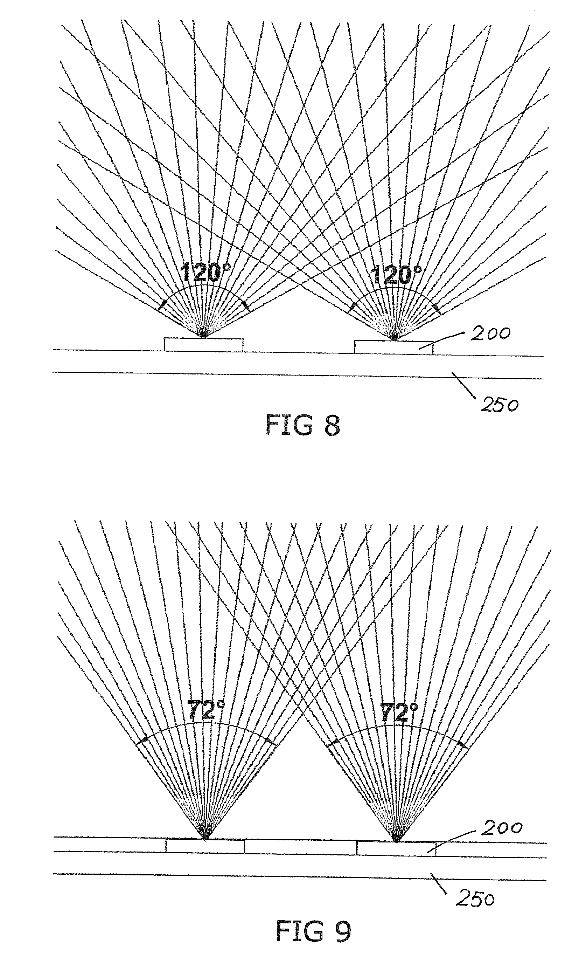

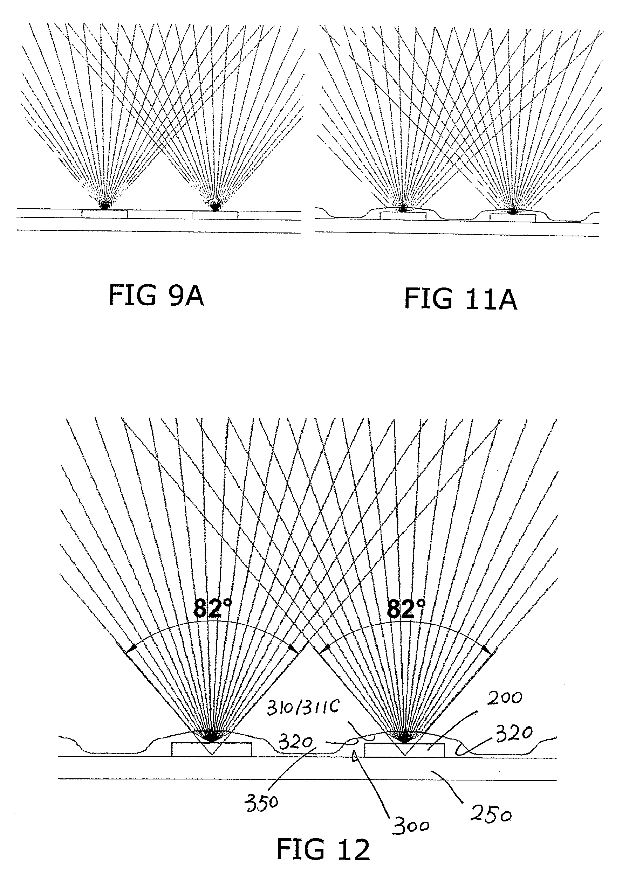

As a typical example, the light emitted by the LEDs 200 covers an angle of 120° conically about the central axis normal to the LED's front surface (Figure 8). When used alongside a flat straight peripheral edge of the panel body of a known light panel, the LEDs 200 emits light which immediately penetrates into the panel body at an angle of dispersion of 72° (Figure 9).

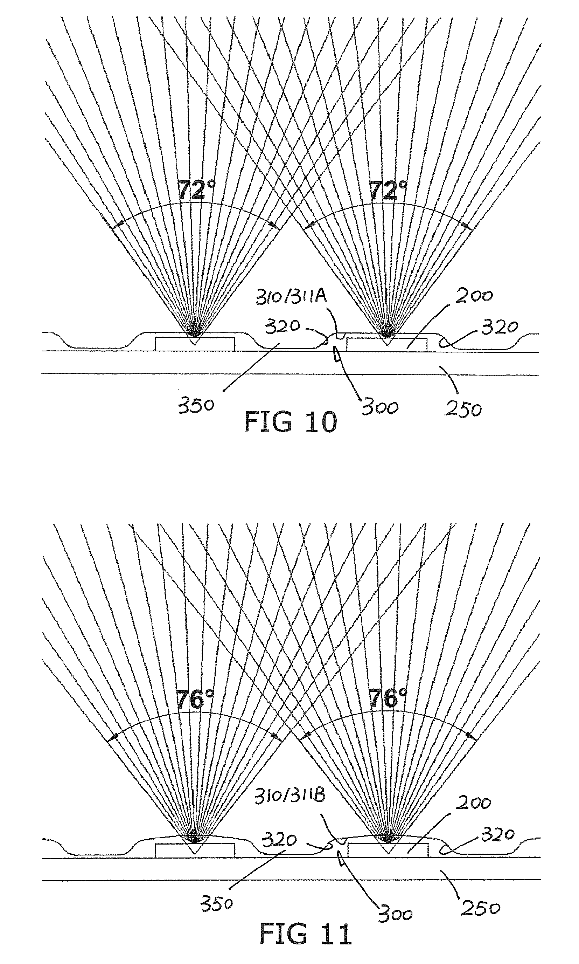

With the design of a flat or planar profile 311A for the clear transparent bases 310 of the recesses 300, the light from the LEDs 200 penetrates into the panel body 100 at the same angle of dispersion of 72° (Figure 10). The angle of dispersion does not change because the light incident surface on the panel body 100 remains flat and the gap between the LED 200 and the recess base 310 remains parallel, comparing the flat-base recesses 300 of the described embodiment with the aforesaid known panel body whose light-entering edge is flat straight. It has been assumed that both panel bodies are made of the material, etc.

The angle of dispersion is one of the factors that affect the performance of the light panel 10. Taking an example, for uniform illumination, a relatively large panel body does not only need more, and more closely packed, LEDs but also a more focused (i.e. narrow) angle of dispersion such that the LED light can shine farther out and reach the central region of the panel body. On the other hand, a wider angle of dispersion (and less LEDs) is sufficient to cover the length of a relatively small panel body.

To change the angle of dispersion, a curved profile may be adopted for the clear transparent bases 310 of the recesses 300, being a profile that is curved as measured across the opposite sides 320 of the recess 300. In another embodiment, with a curved profile 311B being concave facing the associated LED 200, the angle of dispersion of the penetrating light is widened to 76° (Figure 11). With a second curved profile 311C being concave to a greater extent in yet another embodiment, the angle of dispersion is further widened to 82° (Figure 12).

The gap between the LED 200 and the recess base 310 constitutes, in effect, a "bubble" lens (i.e. lens made of a less denser material than its surrounding) which, despite being convex in cross-section, diverges light as in the case of a concave lens. The effect of such a lens, e.g. light diverging, is visually evident by comparing Figure 11A showing a lens to Figure 9A without a lens.

It is observed that the larger the curvature of the recess base profile 311B/311C is, the wider the angle over which the LED light penetrates into the panel body 100 becomes, or vice versa.

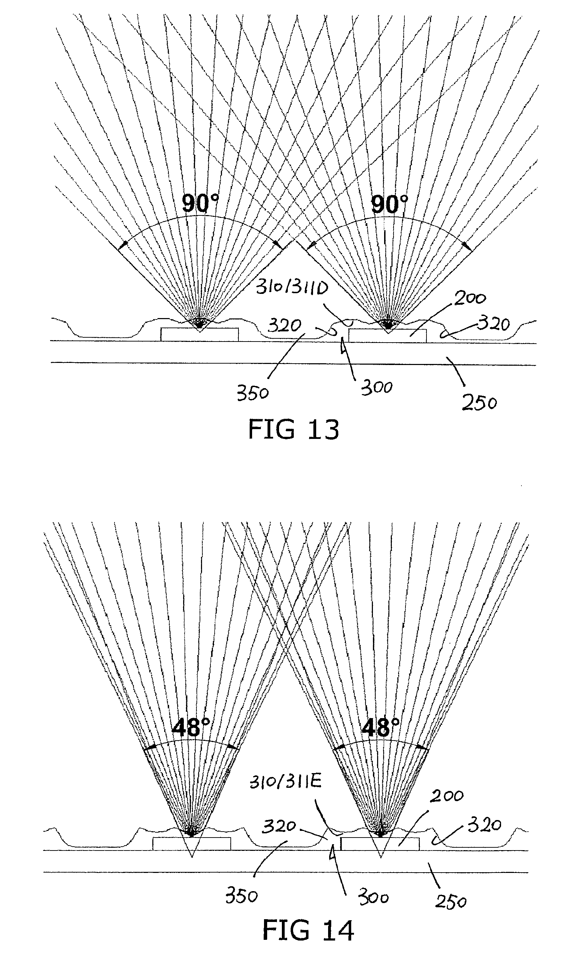

In a further different embodiment, the subject light panel 10 utilizes a base profile 311D for the panel body recesses 300, which has a series of curved sections, for example three consecutive concave sections or lenses across the opposite sides 320 of each recess 300 (Figure 13).

This multiple-concave base profile 311D has the same, and enhanced, effect of widening the angle of dispersion of the penetrating light as the single concave base profiles 311B and 311C. An advantage on size or compactness is achieved, in that the curved base 310 can be made thinner without compromising on the profile's curvature that determines the angle of light dispersion, by splitting itself into three consecutive sections, or lenses, each to cover only one-third width of the recess 300. With this triple-concave profile 311D, the angle of dispersion is further widened to 90°.

It is envisaged that the profile of the bases 310 of the recesses 300 may be made convex facing the associated LED light sources 200, for converging the light penetrating into the panel body 100 i.e. reducing the angle of dispersion. In addition, a multiple convex profile 311E may be adopted, which has a series of three convex sections, or lenses, extending in a row across the opposite sides 320 of each recess 300, resulting in a narrower or more focused dispersion angle to 48° (Figure 14).

By exhibiting such optical characteristics, the aforesaid gap, i.e. between the LEDs 200 and the indented bases 310 of the recesses 300 that protects the LEDs 200, acts as secondary optics. Such secondary optics may spread or disperse light rays in a wider angle for earlier mixing of light rays between LEDs to increase the lumens output and optical efficiency of the light panel 10 by about 5%. Alternatively, as mentioned earlier, the secondary optics may focus light rays into a narrower angle of dispersion for illumination over a longer distance.

To sum up, the indented bases 310 may be flat or curved, i.e. concave or convex, or composed of multiple curved sections to provide a secondary optics for redistributing the light rays at a desired dispersion angle.

Each of the outer parts 350 has a flat surface, against which the relevant PCB strip 250 abuts in a co-planar or flat-on engagement for stability and minimal stress. Each outer part 350 has a smoothly curved transition, in the form of a round shoulder, to the adjoining recess 300 on either side. As to the recesses 300, each of their opposite sides 320 adjoins the relevant base 310 via a smoothly curved transition that is in the form of a round corner. By presence of these round shoulders and corners, the recess sides 320 are slanted as shown.

In general, the aforesaid smoothly curved transitions are preferred to avoid congested and/or irregular reflection of light at the back of the peripheral edges 150. For the same reason, it is preferred that the interface between the curved sections or lenses across the bases 310 of the recesses 300 is also made smoothly curved (Figures 13 and 14).

The invention has been given by way of example only, and various other modifications of and/or alterations to the described embodiments may be made by persons skilled in the art without departing from the scope of the invention as specified in the appended claims. For example, the LEDs may be replaced by any other type of light sources such as incandescent light bulbs or fluorescent tubes.

## Claims

1. A light panel comprising:
a panel body of a light transmissive material and having a peripheral edge; and
a series of discrete light sources mounted on a support and located alongside and facing the peripheral edge for emitting light which penetrates into the panel body via the peripheral edge and illuminates the panel body;
**characterized in that** the peripheral edge includes a series of recesses accommodating the light sources, each recess having a base, and an outer part between each pair of adjacent recesses for abutment by the support such that the light sources are spaced apart from the bases of the recesses that accommodate the light sources.

2. The light panel as claimed in claim 1, **characterized in that** the panel body has two opposite principal sides between which the peripheral edge extends, and each recess is open to both principal sides.

3. The light panel as claimed in claim 1, **characterized in that** the base of each recess has a clear transparent surface, through which light from the light source accommodated in the recess penetrates into the panel body, the clear transparent surface extending linearly in a direction across the principal sides.

4. The light panel as claimed in claim 3, **characterized in that** each recess has a pair of opposite sides flanking its base, whose clear transparent surface has a profile which extends across the opposite sides and determines the angle of dispersion of light from the associated light source penetrating into the panel body.

5. The light panel as claimed in claim 4, **characterized in that** the profile is planar.

6. The light panel as claimed in claim 4, **characterized in that** the profile is curved across the opposite sides of the recess, being concave or convex facing the associated light source.

7. The light panel as claimed in claim 6, **characterized in that** the profile comprises a series of curved sections across the opposite sides of the recess.

8. The light panel as claimed in any one of claims 4 to 7, **characterized in that** each of the opposite sides adjoins the base via a smoothly curved transition.

9. The light panel as claimed in claim 8, **characterized in that** the transition comprises a round corner.

10. The light panel as claimed in any one of claims 4 to 7, **characterized in that** the or each outer part has a flat surface for abutment by the support.

11. The light panel as claimed in claim 10, **characterized in that** the or each outer part has a smoothly curved transition to each adjoining recess, and optionally the transition comprises a round shoulder.

12. The light panel as claimed in any one of claims 4 to 7, **characterized in that** the recesses are evenly distributed along the peripheral edge.

13. The light panel as claimed in any one of claims 4 to 7, **characterized in that** each recess accommodates one respective light source.

14. The light panel as claimed in any one of claims 4 to 7, **characterized in that** the panel body includes an array of small light reflectors for reflecting light to exit the panel body.

15. The light panel as claimed in claim 14, **characterized in that** the light reflectors comprise pits or laser dots.
